# FASCICULE DE BREVET EUROPEEN

(11) **EP 0 720 967 B1**
(45) Date de publication et mention de la délivrance du brevet: **22.04.1998**
(21) Numéro de dépôt: 95420365.9
(22) Date de dépôt: 21.12.1995
(51) Int. Cl.: C01B 33/037, C07F 7/16, C22C 35/00, C22C 1/02

(54) **Silicium et ferrosilicium métallurgique à basse teneur en oxygène**
Metallurgisches Silizium und Ferrosilizium mit niedrigem Sauerstoffgehalt
Metallurgical silicon and ferrosilicon of low oxygen content

(30) Priorité: 09.01.1995 FR 9500330
(43) Date de publication de la demande: 10.07.1996
(73) Titulaire: PECHINEY ELECTROMETALLURGIE, 92400 Courbevoie (FR)
(72) Inventeur: Sales, Maurice, F-74000 Annecy (FR); Margaria, Thomas, F-74190 Chedde Passy (FR)
(74) Mandataire: Mougeot, Jean-Claude

(56) Documents cités:
- DE-A- 3 223 821
- DE-A- 3 405 613
- FR-A- 1 169 508
- FR-A- 2 709 082
- M. FILIPOVICH ET AL. 'Symposium International de la Production des Ferroalliages et du Silicium cristallisé. Sibenik (Yougoslavie), 17-21 septembre 1975' * page 1 - page 21 * * page 13 - page 14, alinéa 6 *

## Description

### Domaine technique

L'invention concerne le silicium métallurgique, c'est-à-dire le silicium obtenu par réduction carbothermique de la silice au four électrique, et destiné principalement à la fabrication des silicones et des alliages aluminium-silicium, ainsi que le ferrosilicium haute pureté, obtenu par réduction carbothermique de la silice en présence de ferrailles, et destiné en particulier à la fabrication des tôles d'acier magnétique pour transformateurs.

### Etat de la tehnique

La synthèse des alkyl ou aryl halogénosilanes par réaction entre 250 et 350°C d'un hydrocarbure halogéné sur du silicium en présence de cuivre est connue depuis le brevet US 2380995 délivré le 7/08/1945 à E.G. ROCHOW.

Cette réaction, appelée réaction de ROCHOW, a atteint un développement industriel important, étant en particulier à la base de l'industrie des silicones. Elle se pratique en général avec le chlorure de méthyle CH₃Cl, et conduit à un mélange de différents méthylchlorosilanes en proportions variables. La teneur en oxygène du silicium utilisé dans cette synthèse influe sur son résultat de plusieurs manières:
- l'oxygène fixé à la surface du silicium forme une barrière qui ralentit la réaction, et donc la productivité d'un réacteur donné. Pour cette raison, la demanderesse a proposé dans le brevet européen EP 0494837 une poudre de silicium métallurgique à faible oxydation superficielle dont la surface est protégée de l'oxydation par une substance organique.
- l'oxygène contenu dans la masse est surtout présent sous forme d'inclusions de laitier constitué principalement d'oxydes; ce laitier n'a pas d'influence directe sur la cinétique de la réaction de ROCHOW, mais il présente l'inconvénient de laisser un résidu inerte qui peut s'accumuler dans les réacteurs industriels et en réduire le volume utile, ce qui passe inaperçu quand on se contente d'évaluer la qualité du silicium au moyen de tests de laboratoire.

Par ailleurs, en métallurgie,la fabrication d'alliages aluminium-silicium requiert également des matériaux de base à faible teneur en oxygène, car les inclusions de laitiers dans l'alliage final ont des conséquences néfastes sur les caractéristiques mécaniques.

Enfin, pour la fabrication de tôles magnétiques destinées aux transformateurs et machines tournantes, on utilise un ferrosilicium à très basses teneurs en impuretés et une faible teneur en oxygène a un effet favorable sur la perméabilité magnétique.

Pour ces différentes raisons, il est apparu nécessaire de proposer un silicium ou un ferrosilicium à faible teneur en oxygène, aussi bien en surface que dans la masse.

Le silicium et le ferrosilicium fabriqués par réduction carbothermique de la silice au four électrique contiennent diverses impuretés, en particulier le calcium et l'aluminium, qui sont éliminées ultérieurement par affinage oxydant. On peut réaliser cet affinage au chlore ou à l'oxygène.

Des résultats comparés de ces deux types d'affinage ont été présentés par M. FILIPOVICH et F. MULALICH au Symposium International de la Production des Ferro-alliages et du Silicium à SIBENIK (Yougoslavie) 17-21/09/1975.

L'utilisation du chlore posant des problèmes de sécurité et d'environnement, l'affinage du silicium ou du ferrosilicium se fait généralement à l'oxygène et il contient ainsi plus de 0,25% d'oxygène malgré les précautions prises pour séparer métal et laitier.

Le silicium ou ferrosilicium liquide ainsi affiné peut être coulé et solidifié de différentes façons. Par exemple, la recherche de structures particulières pour l'application silicones a conduit à contrôler la vitesse de solidification et de refroidissement.

Une technique, d'application récente dans le cas du silicium, consiste à granuler le produit à l'eau, c'est-à-dire à couler le silicium fondu vers 1500°C directement dans l'eau. On obtient ainsi une cristallisation bien structurée mais on constate une forte oxydation superficielle tout à fait indésirable des grains de silicium.

Pour éviter cet inconvénient, la demanderesse a proposé, dans sa demande de brevet français FR-A-2.709.082, d'effectuer cette granulation sous atmosphère inerte. On peut ainsi obtenir un silicium à moins de 0,15% d'oxygène, dont la teneur en oxygène superficiel est de l'ordre de 100 ppm. Mais cette teneur totale s'avère encore trop élevée.

### Objet de l'invention

L'invention a ainsi pour objet un silicium métallurgique ou un ferrosilicium de haute pureté, sous forme de granulés de taille < 10 mm ou de poudre de granulométrie < 0,4 mm, dont la teneur totale en oxygène est inférieure à 0,05% (en poids).

Pour atteindre une teneur aussi réduite, les inventeurs ont eu l'idée d'associer d'une part l'affinage au chlore du silicium ou ferrosilicium liquide et d'autre part la granulation à l'eau sous atmosphère inerte, alors qu'aucun des procédés pris isolément ne permet d'atteindre un tel niveau de pureté.

### Description de l'invention

Le silicium ou le ferrosilicium selon l'invention, présente, à l'état granulé, une teneur totale en oxygène < 0,05%, se décomposant en environ 0,01% d'oxygène à la surface des granulés et moins de 0,04% dans la masse.

Le produit en poudre obtenu par broyage des granulés présente une oxydation de surface qui n'est pas uniformément répartie, la surface après broyage étant en moyenne moins oxydée que celle des granulés.

Le ferrosilicium haute pureté a une teneur en Si comprise entre 60 et 80% (en poids), les compositions les plus courantes étant à 65 et 75%.

Le silicium pour la fabrication des silicones peut être allié à d'autres éléments, comme le cuivre jusqu'à une teneur de 8% ou le phosphore jusqu'à 0,2%, qui sont des promoteurs de la réaction de ROCHOW. Il contient moins de 0,5% de fer, moins de 0,3% d'aluminium et moins de 0,10% de calcium, les teneurs en Al et Ca pouvant être ajustées à des valeurs prédéterminées, de manière à obtenir dans la microstructure des composés intermétalliques favorables pour la réaction de ROCHOW.

La basse teneur globale en oxygène des produits selon l'invention est obtenue par la combinaison de l'affinage au chlore du métal liquide et sa granulation à l'eau sous atmosphère inerte.

Si on affine au chlore un silicium préparé en four à induction sous vide par incorporation de Ca et Al à l'état métallique à du silicium de qualité électronique, on obtient facilement des teneurs résiduelles < 0,05% de Ca et < 0,12% d'Al.

Si, au contraire, le silicium de départ contient en suspension des inclusions de laitier, ce qui est toujours le cas pour un silicium liquide élaboré par carbothermie au four électrique, les teneurs résiduelles en Ca et Al, après traitement au chlore, sont principalement le fait de la présence des inclusions de laitier sur lesquelles le traitement au chlore est sans effet, puisqu'il s'agit d'oxydes Al₂O₃ et CaO.

Les résultats indiqués par FILIPOVICH et MULALICH dans la communication mentionnée plus haut font apparaître une teneur résiduelle moyenne en Ca de 0,39%, avec un écart-type de 0,24%, ce qui ne peut s'expliquer que par une teneur en oxygène variable de 0,17% en moyenne.

L'affinage au chlore peut se faire par le chlore gazeux, mais également à l'aide d'un composé chloré, tel que CCl₄ ou C₂Cl₆.

La granulation à l'eau peut se faire en versant le ferrosilicium ou le silicium liquide dans une goulotte percée d'un orifice, le jet de métal provenant de cet orifice venant se briser sur une coupelle horizontale disposée sous l'orifice et se divisant en gouttes liquides qui tombent ensuite dans un récipient rempli d'eau de refroidissement. Les gouttes ainsi formées se solidifient et se rassemblent au fond du récipient. La partie supérieure du récipient, dans laquelle se trouve la coupelle, est balayée par un courant de gaz inerte, qui peut être de l'azote ou un mélange air-azote.

On constate que la combinaison de ce type de granulation et de l'affinage au chlore du métal fondu conduisent à une teneur en oxygène nettement inférieure à celle du silicium ou du ferrosilicium métallurgiques préparés selon tous les procédés de l'art antérieur.

Les granulés ainsi obtenus, de taille moyenne inférieure à 10 mm, peuvent être broyés sous forme d'une poudre de granulométrie moyenne inférieure à 0,4 mm, en utilisant de préférence un additif de broyage protégeant le produit de l'oxydation. Dans le cas du silicium, le brevet EP 0494837 de la demanderesse préconise ainsi un broyage sous atmosphère peu réactive, par exemple de l'argon, de l'azote ou un mélange air-azote, en présence d'une huile, qui peut être un alcane, un ester, un corps gras ou une huile de silicone. Si le silicium est utilisé pour la fabrication des silicones, cette huile doit être soluble dans le chlorure de méthyle ou volatile à 300°C. La quantité d'additif restant dans le produit broyé est généralement inférieure à 1% en poids.

### Exemples

### Exemple 1

Une poche de coulée pleine de silicium en fusion provenant d'une carboréduction de silice au four électrique est soigneusement transvasée dans une poche chaude pour séparer le silicium en fusion du laitier provenant du four. La poche de silicium fondu ainsi obtenue est traitée par injection d'oxygène pour oxyder le calcium et l'aluminium. Le laitier formé pendant l'affinage est séparé par décantation lors de la coulée en lingotières du silicium en fusion.

Le produit est ensuite refroidi, cassé puis broyé à une granulométrie < 0,4 mm dans des broyeurs à barres, sous atmosphère d'azote, avec ajout de 0,3% de tristéarate de glycérol.

Pendant une campagne de fabrication, où on a enchaîné les opérations en prenant soin de décrasser la poche après chaque coulée, on a effectué pendant une journée complète une analyse de la teneur en oxygène du silicium repéré coulée par coulée.

Pour mesurer la teneur totale en oxygène, on broie l'échantillon à une granulométrie de 0,25 mm, puis on tamise à 0,05 mm de manière à ne garder que la fraction 0,25 - 0,05 mm. En effet, la fraction < 0,05 mm subit lors de cette préparation une oxydation additionnelle qui ne peut être prise en compte.

On effectue sur la fraction 0,25 - 0,05 mm une prise d'essai de 250 mg qui est emballée dans une feuille d'étain pour être introduite dans le creuset graphite d'un appareil LECO à une température de 3000°C. L'oxygène de l'échantillon est transformé en CO, lequel est ensuite oxydé en CO₂ pour être dosé. Le résultat final est calculé sur la moyenne de 5 opérations.

Pour obtenir la teneur en oxygène superficiel, on fait subir les mêmes traitements à du silicium de qualité électronique.

Sa teneur en oxygène dans la masse étant pratiquement nulle, la teneur totale mesurée correspond à la teneur en surface, qui est la même que celle d'un échantillon de silicium métallurgique ayant subi le même traitement.

Les 12 coulées de la journée ont donné les teneurs suivantes en oxygène total:

| | | | |
|---|---|---|---|
| 0,24% | 0,21% | 0,25% | 0,20% |
| 0,23% | 0,26% | 0,24% | 0,23% |
| 0,25% | 0,22% | 0,24% | 0,23% |
| moyenne: 0,23% | | | |

### Exemple 2

Pendant une campagne d'essais de granulation, le même contrôle de la teneur en oxygène total du silicium a été effectué pendant une journée de fabrication.

Le procédé d'élaboration comprenait les mêmes étapes que dans l'exemple précédent, la coulée en lingotières étant remplacée par une granulation dans l'eau sous atmosphère d'azote.

Les 12 coulées de la journée ont donné les teneurs suivantes en oxygène total:

| | | | |
|---|---|---|---|
| 0,14% | 0,11% | 0,09% | 0,11% |
| 0,12% | 0,13% | 0,14% | 0,10% |
| 0,11% | 0,09% | 0,12% | 0,11% |
| moyenne: 0,114% | | | |

### Exemple 3

Dans un four à induction de laboratoire, on fond 13 kg environ de silicium métal affiné auquel on ajoute après fusion 70 g de calcium et 130 g d'aluminium. Le bain fondu est ensuite traité au chlore, avec un débit de 30 l/mn. La durée de traitement est de 5 minutes.

Les analyses en Ca, Al et O₂ sont effectuées sur un échantillon directement prélevé sur le métal en fusion par aspiration dans un tube de graphite où il se solidifie.

4 essais de ce type ont donné les résultats suivants:

| Essai | Al % | Ca ppm | O₂ ppm |
|---|---|---|---|
| 1 | 0,086 | 40 | 88 |
| 2 | 0,140 | 52 | 90 |
| 3 | 0,100 | 49 | 99 |
| 4 | 0,140 | 47 | 121 |
| moyenne | 0,127 | 47 | 100 |

### Exemple 4

On reprend les conditions de l'exemple 1 et on remplace l'affinage à l'oxygène par un affinage au chlore.

Les analyses d'oxygène total donnent les résultats suivants:

| | | | |
|---|---|---|---|
| 0,17% | 0,15% | 0,12% | 0,16% |
| 0,11% | 0,14% | 0,13% | 0,18% |
| 0,12% | 0,15% | 0,11% | 0,14% |
| moyenne: 0,14% | | | |

On voit, par comparaison avec l'exemple 3, que le fait d'opérer à partir de silicium fondu brut de carbothermie coulé à l'air fait perdre une bonne partie du gain que l'on devrait tirer d'un affinage au chlore pour la teneur en oxygène final.

### Exemple 5

On reprend les conditions opératoires de l'exemple 2, mais en remplaçant l'affinage à l'oxygène par un affinage au chlore et l'on refait un contrôle des teneurs en oxygène obtenues pendant une journée de fabrication. On obtient:

| | | | |
|---|---|---|---|
| 530 ppm | 517 ppm | 498 ppm | 507 ppm |
| 485 ppm | 525 ppm | 512 ppm | 470 ppm |
| 490 ppm | 505 ppm | 520 ppm | 485 ppm |
| moyenne oxygène total: 504 ppm | | | |

sur lesquels 100 ppm environ ont été identifiés comme étant dûs à l'oxydation superficielle.

## Revendications

1. Silicium ou ferrosilicium métallurgique sous forme de granulés de taille moyenne inférieure à 10 mm, caractérisé en ce que sa teneur totale en oxygène est inférieure à 0,05% en poids.

2. Silicium selon la revendication 1, caractérisé en ce que sa teneur en fer est inférieure à 0,5%.

3. Silicium selon l'une des revendications 1 ou 2, caractérisé en ce que sa teneur en aluminium est inférieure à 0,3%.

4. Silicium selon l'une des revendications 1 à 3, caractérisé en ce que sa teneur en calcium est inférieure à 0,10%.

5. Silicium selon l'une des revendications 1 à 4, caractérisé en ce qu'il contient jusqu'à 8% de cuivre.

6. Silicium ou ferrosilicium selon l'une des revendications 1 à 5, caractérisé en ce qu'il est broyé sous forme de poudre de granulométrie < 0,4 mm et qu'il contient un additif de broyage à une teneur < 1% en poids.

7. Silicium selon la revendication 6, caractérisé en ce que l'additif est un produit organique soluble dans le chlorure de méthyle et/ou volatil à 300°C.

8. Procédé de fabrication de silicium ou de ferrosilicium selon l'une quelconque des revendications 1 à 7 comportant:
- une réduction carbothermique de la silice au four électrique,
- un affinage au chlore du métal liquide,
- une granulation à l'eau sous atmosphère inerte du métal liquide affiné.

9. Procédé selon la revendication 8, caractérisé en ce que l'affinage est réalisé à l'aide d'un composé chloré.

10. Procédé selon la revendication 9, caractérisé en ce que le composé chloré est CCl₄ ou C₂Cl₆.

11. Procédé selon l'une des revendications 8 à 10, caractérisé en ce que la granulation est faite sous atmosphère d'azote ou d'un mélange air-azote.

12. Silicium selon l'une des revendications 1 à 7 utilisé comme matière première pour la synthèse des alkyl ou aryl halogénosilanes.

13. Silicium selon l'une des revendications 1 à 7 utilisé comme élément d'alliage aluminium-silicium.

14. Ferrosilicium selon la revendication 1 utilisé comme élément d'addition à l'acier pour la fabrication de tôles magnétiques.

## Claims

1. Metallurgical silicon or ferrosilicon in the form of granulates having an average size of less than 10 mm, wherein the total oxygen content thereof is less than 0.05% by weight.

2. Silicon according to claim 1, wherein the iron content thereof is less than 0.5%.

3. Silicon according to either of claims 1 or 2, wherein the aluminum content thereof is less than 0.3%.

4. Silicon according to any of claims 1 to 3, wherein the calcium content thereof is less than 0.10%.

5. Silicon according to any of claims 1 to 4, wherein said silicon contains a copper content of up to 8%.

6. Silicon or ferrosilicon according to any of claims 1 to 5, wherein said silicon or ferrosilicon is ground in the form of a powder having a granulometry of less than 0.4 mm and contains a grinding additive in a proportion of less than 1%.by weight.

7. Silicon according to claim 6, wherein the additive is an organic product soluble in methyl chloride and/or volatile at 300° C.

8. Process for manufacture of silicon or ferrosilicon according to any of claims 1 to 7, consisting of:
- a carbothermal reduction of silica in an electric oven,
- chlorine-based refining of the liquid metal,
- granulation of the refined liquid metal in water under an inert atmosphere.

9. Process according to claim 8, wherein the refining operation is performed using a chlorinated compound.

10. Process according to claim 9, wherein the chlorinated compound is CCl₄ or C₂Cl₆.

11. Process according to any of claims 8 to 10, wherein granulation is carried out under an atmosphere of nitrogen or of an air/nitrogen mixture.

12. Silicon according to any of claims 1 to 7 used as the raw material for the synthesis of alkyl or aryl halogenosilanes.

13. Silicon according to any of claims 1 to 7 used as a constituent of an aluminum/silicon alloy.

14. Ferrosilicon according to claim 1 used as a constituent added to steel for the manufacture of magnetic sheet metals.

## Patentansprüche

1. Metallurgisches Silizium bzw. Ferrosilizium in Form von Granulat mit einer durchschnittlichen Teilchengröße von weniger als 10 mm, dadurch gekennzeichnet, dass sein Sauerstoffgehalt niedriger ist als 0,05 Gewichtsprozent.

2. Silizium nach Anspruch 1, dadurch gekennzeichnet, dass sein Eisengehalt niedriger ist als 0,5 %.

3. Silizium nach einem der Ansprüche 1 oder 2, dadurch gekennzeichnet, dass sein Aluminiumgehalt niedriger ist als 0,3 %.

4. Silizium nach einem der Ansprüche 1 bis 3, dadurch gekennzeichnet, dass sein Kalziumgehalt niedriger ist als 0,10 %.

5. Silizium nach einem der Ansprüche 1 bis 4, dadurch gekennzeichnet, dass es bis zu 8 % Kupfer enthält.

6. Silizium bzw. Ferrosilizium nach einem der Ansprüche 1 bis 5, dadurch gekennzeichnet, dass es in Form von Pulver mit einer Teilchengröße von < 0,4 mm gemahlen wird und einen Mahlungszusatz mit einem Anteil von < 1 Gewichtsprozent enhält.

7. Silizium nach Anspruch 6, dadurch gekennzeichnet, dass der Zusatz ein organisches Produkt ist, das in Methylchlorid löslich und/oder bei 300°C leicht flüchtig ist.

8. Verfahren zur Herstellung von Silizium bzw. Ferrosilizium nach einem der Ansprüche 1 bis 7, umfassend
- eine karbothermische Reduktion der Kieselsäure im elektrischen Ofen,
- eine Raffination des Flüssigmetalls mit Chlor,
- eine Granulation des raffinierten Flüssigmetalls mit Wasser in einer Schutzgasatmosphäre.

9. Verfahren nach Anspruch 8, dadurch gekennzeichnet, dass die Raffination mit Hilfe einer Chlorverbindung durchgeführt wird.

10. Verfahren nach Anspruch 9, dadurch gekennzeichnet, dass es sich bei der Chlorverbindung um CCl₄ oder C₂Cl₆ handelt.

11. Verfahren nach einem der Ansprüche 8 bis 10, dadurch gekennzeichnet, dass die Granulation in einer Stickstoffatmosphäre oder einer Atmosphäre aus einem Stickstoff-Luft-Gemisch erfolgt.

12. Verwendung des Siliziums nach einem der Ansprüche 1 bis 7 als Ausgangsmaterial für die Synthese der Alkyl- oder Arylhalogenide.

13. Verwendung des Siliziums nach einem der Ansprüche 1 bis 7 als Aluminium-Silizium-Legierungselement.

14. Verwendung des Ferrosiliziums nach Anspruch 1 als Zusatzelement zu Stahl zur Herstellung von Magnetblechen.
